(19) Europäisches Patentamt
European Patent Office
Office européen des brevets

(11) Veröffentlichungsnummer: **0 253 052 B1**

(12) **EUROPÄISCHE PATENTSCHRIFT**

(45) Veröffentlichungstag der Patentschrift: **06.05.92**

(51) Int. Cl.$^5$: **C08J 7/02**, C08J 3/18, C08L 27/06

(21) Anmeldenummer: **87101486.6**

(22) Anmeldetag: **04.02.87**

Die Akte enthält technische Angaben, die nach dem Eingang der Anmeldung eingereicht wurden und die nicht in dieser Patentschrift enthalten sind.

# (54) Verfahren zur Wiederherstellung von verlegten Dachdichtungsbahnen aus Weich-Polyvinylchlorid.

(30) Priorität: **14.06.86 DE 3620068**

(43) Veröffentlichungstag der Anmeldung: **20.01.88 Patentblatt 88/03**

(45) Bekanntmachung des Hinweises auf die Patenterteilung: **06.05.92 Patentblatt 92/19**

(84) Benannte Vertragsstaaten: **AT DE FR GB NL SE**

(56) Entgegenhaltungen:
**US-A- 2 622 038**
**US-A- 4 131 700**
**US-A- 4 358 499**
**US-A- 4 615 910**

**CHEMICAL ABSTRACTS, Band 83, Nr. 18, 1975, Seiten 38,39, Nr. 148233n, Columbus, Ohio, US; T. FUJIMURA et al.: "Supplemental plasticization of poly(vinyl chloride)"**

(73) Patentinhaber: **Dengl, Dieter, Dipl.-Ing.**
**Simon-Feylner-Strasse 7**
**W-6710 Frankenthal (Pfalz)(DE)**

Patentinhaber: **Kooy, Theodorus, Dipl.-Ing.**
**Kleiststrasse 18**
**W-6717 Hessheim(DE)**

Patentinhaber: **Wulff, Ekkehard**
**Raiffeisenstrasse 2**
**W-6520 Worms(DE)**

(72) Erfinder: **Dengl, Dieter, Dipl.-Ing.**
**Simon-Feylner-Strasse 7**
**W-6710 Frankenthal (Pfalz)(DE)**
Erfinder: **Kooy, Theodorus, Dipl.-Ing.**
**Kleiststrasse 18**
**W-6717 Hessheim(DE)**
Erfinder: **Wulff, Ekkehard**
**Raiffeisenstrasse 2**
**W-6520 Worms(DE)**

(74) Vertreter: **Zellentin, Wiger**
**Patentanwälte Dr. rer. nat. Rüdiger Zellentin**
**Dipl.-Ing. Wiger Zellentin Rubensstrasse 30**
**W-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(-/2.19/2.0)

**Beschreibung**

Die Erfindung betrifft ein Verfahren zur Wiederherstellung von verlegten Dachdichtungsbahnen aus Weich-Polyvinylchlorid, mit oder ohne Auflast, die Phthalsäureester als Weichmacher enthalten und bei denen sich im Laufe der Zeit nach der Verlegung der Gehalt an Weichmacher infolge von Umwelt- oder Kapillarwirkung und/oder Wasserextraktion verringert hat, mittels einer thixotropierten Weichermacherpaste.

Derartige Dachdichtungsbahnen aus Weich-Polyvinylchlorid werden seit vielen Jahren mit und ohne Auflast als Dachschutz bei den verschiedensten Gebäuden eingesetzt. Im Laufe der Zeit ändern und verschlechtern sich dabei die Eigenschaften dieser Dachdichtungsbahnen, da der Weichmachergehalt in der Polyvinylchloridbahn durch Kapillarwirkung und/oder Wasserextraktion, Witterungseinflüssen, Einwirkung von Mikroorganismen usw. abnimmt. Die Dachdichtungsbahnen verhärten und verspröden, werden daher gegen Witterungseinflüsse undicht und mußten bis heute durch neuverlegte Bahnen ersetzt werden. Dies bedeutet einen erheblichen kostenmäßigen Aufwand an Material und Arbeitszeit.

Der Erfindung liegt daher die Aufgabe zugrunde, verlegte Dachdichtungsbahnen aus Weich-Polyvinylchlorid mit und ohne Auflast, deren Weichmachergehalt sich nach längerer Werlegezeit verringert hat, infolge Umwelt- bzw. Witterungseinflüssen, z. B. durch Migration, durch Kapillarwirkung und/oder Wasserextraktion - um den Weichmachergehalt des Neuzustandes in der Folienbahn wiederherzustellen - an dem Ort ihrer Verlegung zu sanieren. Aus Plast. Ind. News, 21 (1975) S. 49-52 ist bekannt, PVC-Folien in Bäder aus Dioctylphthalsäureester (DOP) einzutauchen, wobei das DOP mit Lösungsmitteln wie Tetrachlorkohlenstoff oder Hexan verdünnt werden muß, um eine Zerstörung der Folie zu vermeiden. Bei Raumtemperatur werden für eine ausreichende Regenerierung ca. 40 Tage benötigt. Ein direktes Aufbringen durch Versprühen der Lösung auf die verlegten Folien ist möglich, aber problematisch, weil Unebenheiten und Verunreinigungen eine gleichmäßige Verteilung verhindern und die Lösungsmittel Umweltprobleme bewirken.

Aus der US-A-2622038 ist bekannt, PVC-Walzen oder ähnliche Gegenstände mit Tricresylphosphat oder DOP als Weichmacher zu regenerieren, indem man den Weichmacher zusammen mit einem leichten Mineralöl als Lösungsvermittler aufsprüht oder die Teile in ein entsprechendes Bad eintaucht. Erhöhte Temperaturen sind notwendig, um das Eindringen der Weichmacher in die PVC-Masse zu beschleunigen. Beide Verfahren sind für die Regenerierung von verlegten Dachbahnen nicht geeignet.

Die Aufgabe wird erfindungsgemäß dadurch gelöst, daß die Oberfläche der Polyvinylchloridfolie zuerst gereinigt wird, darauf pro Quadratmeter der verlegten Folienbahn 100 bis 500 g an Weichmacherpaste - in Abhängigkeit von der Foliendicke und dem Restweichmachergehalt - in einem einmaligen oder mehrmaligen Auftrag aufgebracht wird, wobei diese Weichmacherpaste aus Estern der Phthalsäure mit $C_4$ - $C_{13}$-Alkoholresten oder Mischungen davon und/oder Estern der Adipinsäure, Azelainsäure, Phosphorsäure oder Sebacinsäure und/oder Alkylsulfonsäureestern des Phenols oder Kresols besteht, und
ihr zusätzlich 1 - 50, vorzugsweise 3 - 5 Gewichtsprozent an Thixotropier- und Verdickungsmittel zugesetzt sind.

Als vorteilhaft hat es sich bei dem erfindungsgemäßen verfahren dabei herausgestellt, der Weichmacherpaste als Thixotropier- und Verdickungsmittel E- und/oder S-Polyvinylchlorid oder Polyacrylat zuzusetzen.

Der Weichmacherpaste können ebenfalls in einer bevorzugten Ausführungsform als Thixotropier- und Verdickungsmittel amorphe Kieselsäuren und/oder gefällte Kieselsäuren und/oder natürliche Silikate und/oder umgewandelte Silikate zugesetzt werden.

Der Auftrag der Weichmacherpaste auf die Folienbahn erfolgt mittels eines Gummiwischers, einer Bürste, einer Fellwalze oder eines Zahnspaditels.

Für das erfindungsgemäße Verfahren ist es dabei mit wesentlich, daß während des Sanierungsvorganges die Folientemperatur möglichst hoch ist, d. h. gegenüber den umgebenden Lufttemperaturen erhöht ist. Dies wird dadurch erzielt, indem der aufgetragenen Weichmacherpaste Pigmente, vorzugsweise Rußpartikel zugesetzt werden, die nach dem Auftrag der Weichmacherpaste auf die Folienbahn die Wärmeeinstrahlung der Sonne absorbieren und damit der Folienbahn eine höhere Temperatur verleihen als sie in der Umgebung Luft vorhanden ist.

Außerdem hat es sich noch als vorteilhaft herausgestellt, der aufgetragenen Weichmacherpaste zusätzlich auch

Stabilisatoren und/oder UV-Absorber und/oder Biocide zuzusetzen, wodurch die Haltbarkeit der zu sanierenden Folie noch verbessert wird.

Zwecks Verhinderung einer Wärmeausstrahlung bei der Folienbahn werden außerdem in einer weiteren Ausführungsform während des Sanierungsvorganges die mit der Weichmacherpaste beaufschlagten Folienabschnitte mit einem Folientunnel überdeckt, wodurch die Wärmeabstrahlung der betreffenden Folienabschnitte reduziert wird und gleichzeitig die Folienabschnitte vor äußeren Witterungseinflüssen geschützt

werden.
Der Folientunnel kann dabei während der kalten Jahreszeiten z. B. durch ein Warmluftgebläse noch beheizt werden.

Anhand eines Ausführungsbeispiels soll das erfindungsgemäße Verfahren noch weiter erläutert werden.

1. Zuerst werden bei der Folienbahn durch Probenahme und Analyse die noch extrahierbaren Anteile und damit der noch vorhandene Weichmachergehalt bestimmt.
Aus der Kenntnis des noch vorhandenen Weichmachergehaltes, des Quadratmetergewichtes der Folienbahn und des vorhandenen Weichmachergehaltes im Neuzustand der Folienbahn, wird dann die zur Wiederherstellung des ursprünglichen Weichmachergehaltes (im Neuzustand der Folienbahn) erforderliche Pastenauftragsmenge errechnet. Es ergaben sich dabei an noch extrahierbarem Weichmachergehalt (EA) = 21 Gewichtsprozent, bei einem Quadratmetergewicht der Folienbahn (G) von 823 g/m$^2$.
2. Mit der Sanierung sollte der ursprüngliche Zustand der Folienbahn (entsprechend dem Neuzustand) wieder erreicht werden; nämlich bei einen Anteil von 65 Gewichtsprozent an Weich-Polyvinylchlorid und Hilfsstoffen (P) ein Anteil von 35 Gewichtsprozent an Weichmacher (W).
3. Die Bestimmung des Pastenauftrages erfolgte mit folgenden Kenngrößen:

| | |
|---|---|
| WV = vorhandene Weichmachermasse | g/m$^2$ |
| PV = vorhandene PVC + Wilfsstoffe | g/m$^2$ |
| WN = Weichmachermasse in Neuzustand | g/m$^2$ |
| PN = PVC + Hilfsstoffe im Neuzustand | g/m$^2$ |
| WS = zur Sanierung erforderliche Weichmachermasse | g/m$^2$ |
| SP = zur Sanierung erforderlicher Pastenauftrag | g/m$^2$ |
| WP = Weichmachergehalt in der Sanierungspaste; bestimmt mit | 95,2 Gew.% |

Die Berechnung der Menge des Pastenauftrages (SP) erfolgt dann nach den Formeln:

$$WV = \frac{G \times EA}{100} \; ; \; WV = \frac{823 \times 21}{100} = 172{,}8 \text{ g/m}^2$$

$$PV = G - WV \; ; \; PV = 823 - 172{,}8 = 650{,}2 \text{ g/m}^2$$

$$WN = \frac{PV \times W}{P} \; ; \; WN = \frac{650 \times 35}{65} = 350 \text{ g/m}^2$$

$$WS = WN - WV \; ; \; WS = 350 - 173 = 177 \text{ g/m}^2$$

oder zusammengefaßt:

$$WS = \left( \frac{\left( G - \left( \frac{G \times EA}{100} \right) \right) \times W}{P} \right) - \left( \frac{G \times EA}{100} \right)$$

$$WS = \left( \frac{\left( 823 - \left( \frac{823 \times 21}{100} \right) \right) \times 35}{65} \right) - \left( \frac{823 \times 21}{100} \right) = 177 \text{ g/m}^2$$

$$SP = \frac{100 \times WS}{WP} \; ; \; SP = \frac{100 \times 177}{95{,}2} = \underline{186 \text{ g/m}^2}$$

Die vorgesehene Sanierungspaste hatte die Zusammensetzung:

| | |
|---|---|
| 100 g<br>5 g | Dioctylphthalat und<br>hochdisperse amorphe Kieselsäure |

4. Unter Berücksichtigung der bauphysikalischen Gegebenheiten und der zu erwartenden Weichmacher-Aufnahme-Geschwindigkeit wurde dann der auf der Folienbahn liegende Kies abschnittsweise beiseitegeräumt, und zwar in ca. 3 m breiten Streifen mit jeweils 3 m Abstand zueinander, zur vorübergehenden Aufnahme des Kieses.

5. Die freiliegenden Dachabschnitte wurden dann durch Abkehren und danach durch Abspülen mit Wasser von vorhandenen stärkeren Verunreinigungen gereinigt.

6. Nach Abtrocknen der Folienbahn wurde die ausgerechnete Menge an Weichmacherpaste, nämlich ungefähr 190 g/$m^2$ mit einein Gummiwischer gleichmäßig auf die einzelnen Folienabschnitte verteilt.

7. Die Weichmacherpaste war bei einer sommerlichen Temperatur in ungefähr 7 Tagen vollständig in die Folienbahn eingedrungen. Lediglich ein staubförmiger Rückstand, herrührend von dem Verdickungsmittel, war zurückgeblieben. Der Rückstand wurde abgekehrt und auf die einzelnen Folienabschnitte der Kiesbelag wieder aufgebracht.

8. Darauf wurden die bisher ausgesparten Folienabschnitte von der Kiesschicht befreit und in analoger Weise behandelt.

Nach ungefähr 15 Arbeitstagen war dann die gesamte, mit der Kies-Auflast versehene Dachdichtungsbahn saniert. Die Vorteile des erfindungsgemäßen Verfahrens bestehen insbesondere darin, daß Dachdichtungsbahnen mit und ohne Auflast, die Phthalsäureester als Weichmacher enthalten und bei denen sich im Laufe der Zeit nach der Verlegung der Gehalt an Weichmacher infolge von Umwelt- oder Kapillarwirkung und/oder Wasserextraktion verringt, an dem Ort ihrer Verlegung ohne hohe Materialkosten und mit einen geringen Arbeitsaufwand wieder für eine lange Gebrauchsdauer vollständig saniert werden können.

Da die (ursprüngliche verlegte) Dachdichtungsbahn nicht ersetzt werden muß, fällt kein Abfall an, was einen erheblichen positiven Beitrag zum Umweltschutz bedeutet.

## Patentansprüche

**1.** Verfahren zur Wiederherstellung von verlegten Dachdichtungsbahnen aus Weich-Polyvinylchlorid, mit oder ohne Auflast, die Phthalsäurester als Weichmacher enthalten und bei denen sich im Laufe der Zeit nach der Verlegung der Gehalt an Weichmacher infolge von Umwelt- bzw. Witterungseinflüssen durch Kapillarwirkung und/oder Wasserextraktion verringert hat, mittels einer Weichmacherpaste,
dadurch gekennzeichnet, daß die Oberfläche der Polyvinylchloridfolienbahn zuerst gereinigt wird, darauf pro Quadratmeter der verlegten Folienbahn - in Abhängigkeit von den Restweichmachergehalt - 100 bis 500 g an Weichmacherpaste in einem einmaligen oder mehrmaligen Auftrag aufgebracht wird,
wobei diese Weichmacherpaste aus Estern der Phthalsäure mit $C_4$ - $C_{13}$-Alkoholresten oder Mischungen davon und/oder Estern der Adipinsäure, Azelainsäure, Phosphorsäure oder Sebacinsäure und/oder Alkylsulfonsäureestern des Phenols oder Kresols besteht, und
ihr zusätzlich 1 - 50, vorzugsweise 3 - 5 Gewichtsprozent an Thixotropier- und Verdickungsmittel zugesetzt wird.

**2.** Verfahren nach Anspruch 1,
dadurch gekennzeichnet, daß der Weichmacherpaste als Thixotropier- und Verdickungsmittel E- und/oder S-Polyvinylchlorid und/oder Polyacrylat zugesetzt werden.

**3.** Verfahren nach Anspruch 1,
dadurch gekennzeichnet, daß der Weichermacherpaste als Thixotropier- und Verdickungsmittel, amorphe Kieselsäuren und/oder gefällte Kieselsäuren und/oder natürliche Silikate und/oder umgewandelte Silikate zugesetzt werden.

**4.** Verfahren nach Anspruch 3,
dadurch gekennzeichnet, daß der Auftrag der Weichmacherpaste auf die Folienbahn mittels eines Gummiwischers, einer Bürste, einer Fellwalze oder eines Zahnspachtels erfolgt.

**5.** Verfahren nach einem oder mehreren der vorhergehenden Ansprüche,
dadurch gekennzeichnet, daß der aufgetragenen Weichmacherpaste Pigmente, vorzugsweise Rußpartikel zugesetzt sind, die nach dem Auftrag der Weichermacherpaste auf die Folienbahn die Wärmeeinstrahlung der Sonne absorbieren, wodurch die Folientemperatur während des Sanierungsvorganges gegenüber der Umgebungstemperatur höher wird.

**6.** Verfahren nach einem oder mehreren der vorhergehenden Ansprüche,
dadurch gekennzeichnet, daß der aufgetragenen Weichmacherpaste noch Stabilisatoren und/oder UV-Absorber und/oder Biocide zugesetzt werden.

**7.** Verfahren nach einem oder mehreren der vorhergehenden Ansprüche,
dadurch gekennzeichnet, daß während des Sanierungsvorganges die mit der Weichmacherpaste beaufschlagten Folienabschnitte mit einem Folientunnel überdeckt werden, wodurch die Wärmeabstrahlung der betreffenden Folienabschnitte reduziert wird und gleichzeitig die Folienabschnitte von äußeren Witterungseinflüssen geschützt werden.

**Claims**

**1.** Process for the repair of installed roof sealing strips of soft polyvinyl chloride, with or without applied load to the surface, which contain phthalic acid esters as plasticiser and in which, in the course of time after the installation, the content of plasticiser has been reduced as a result of environmental and weathering influences, by capillary action and/or water extraction, by means of a plasticiser paste, characterised in that the surface of the polyvinyl chloride sheeting strip is first cleaned, per square metre of installed film strip there is applied thereto - depending upon the residual plasticiser content - 100 to 500 g of plasticiser paste in one or more applications, whereby the plasticiser paste consists of esters of phthalic acid with $C_4$-$C_{13}$-alcohol residues or mixtures thereof and/or esters of adipic acid, azelaic acid, phosphoric acid or sebacic acid and/or alkylsulphonic acid esters of phenol or cresol and there is additionally added to it 1-50, preferably 3-5 weight percent of thixotroping and thickening agents.

**2.** Process according to claim 1, characterised in that, as thixotroping and thickening agent,E- and/or S-polyvinyl chloride and/or polyacrylate are added to the plasticiser paste.

**3.** Process according to claim 1, characterised in that, as thixotroping and thickening agent, there are added amorphous silicic acids and/or precipitated silicic acids and/or natural silicates and/or modified silicates.

**4.** Process according to claim 3, characterised in that the application of the plasticiser paste takes place to the sheeting strip by means of a rubber wiper, of a brush, of a fleece roller or of a toothed spatula.

**5.** Process according to one or more of the preceding claims, characterised in that to the applied plasticiser paste are added pigments, preferably carbon black particles, which, after the application of the plasticiser paste to the sheeting strip, absorb the heat radiation of the sun, whereby the sheeting temperature during the reconstitution procedure is higher in comparison with the surrounding temperature.

**6.** Process according to one or more of the preceding claims, characterised in that to the applied plasticiser paste are also added stabilisers and/or UV absorbers and/or biocides.

**7.** Process according to one or more of the preceding claims, characterised in that, during the reconstitution procedure, the sheeting sections impinged against with the plasticiser paste are covered over with a sheeting tunnel, whereby the radiating off from the sheeting section in question is reduced and, at the same time, the sheeting sections are protected from external weathering influences.

## Revendications

**1.** Procédé de restauration, à l'aide d'une pâte d'agent plastifiant, de feuilles d'étanchéité de toiture posées à base de chlorure de polyvinyle souple, avec ou sans charge, feuilles qui contiennent des esters d'acide phtalique comme agent plastifiant et dans lesquelles, au cours du temps après la pose, la teneur en agent plastifiant s'est réduite à la suite d'influences de l'environnement et respectivement des intempéries par un effet capillaire et/ou par une extraction par de l'eau, caractérisé en ce que la surface de la feuille de chlorure de polyvinyle est tout d'abord nettoyée, en ce que 100 à 500 g de pâte d'agent plastifiant sont, en fonction de la teneur en agent plastifiant résiduaire, appliqués en une ou plusieurs couches par mètre carré de la feuille posée, cette pâte d'agent plastifiant étant constituée d'esters de l'acide phtalique présentant des radicaux alcool en $C_4$ - $C_{13}$ ou des mélanges de ceux-ci et/ou d'esters de l'acide adipique, de l'acide azélaïque, de l'acide phosphorique ou de l'acide sébacique et/ou d'esters d'acide alkylsulfonique du phénol ou du crésol, et en ce qu'en supplément 1 à 50, de préférence 3 à 5, % en poids d'agent thixotrope et épaississant leur sont ajoutés.

**2.** Procédé suivant la revendication 1, caractérisé en ce qu'à la pâte d'agent plastifiant on ajoute, comme agent thixotrope et épaississant, du chlorure de polyvinyle E et/ou S et/ou du polyacrylate.

**3.** Procédé suivant la revendication 1, caractérisé en ce qu'à la pâte d'agent plastifiant on ajoute, comme agent thixotrope et épaississant, des acides siliciques amorphes et/ou des acides siliciques précipités et/ou des silicates naturels et/ou des silicates transformés.

**4.** Procédé suivant la revendication 3, caractérisé en ce que l'application de la pâte d'agent plastifiant a lieu sur la feuille à l'aide d'un tampon en caoutchouc, d'une brosse, d'un rouleau ou d'une spatule dentée.

**5.** Procédé suivant une ou plusieurs des revendications précédentes, caractérisé en ce qu'à la pâte d'agent plastifiant appliquée on ajoute des pigments, de préférence des particules de noir de fumée, qui, après l'application de la pâte d'agent plastifiant sur la feuille, absorbent le rayonnement thermique du soleil, d'où la température de feuille devient, pendant le processus de rénovation, plus élevée que la température ambiante.

**6.** Procédé suivant une ou plusieurs des revendications précédentes, caractérisé en ce qu'à la pâte d'agent plastifiant appliquée on ajoute encore des agents stabilisants et/ou des agents absorbant les UV et/ou des biocides.

**7.** Procédé suivant une ou plusieurs des revendications précédentes, caractérisé en ce que, pendant le processus de rénovation, les sections de feuille alimentées en pâte d'agent plastifiant sont recouvertes d'un tunnel ce qui permet de réduire la dissipation de chaleur des sections de feuille concernées et de protéger simultanément les sections de feuille des influences extérieures des intempéries.